(19) Europäisches Patentamt
European Patent Office
Office européen des brevets

(11) Veröffentlichungsnummer: **0 244 616 B1**

# (12) EUROPÄISCHE PATENTSCHRIFT

(45) Veröffentlichungstag der Patentschrift: **27.06.90**

(51) Int. Cl.⁵: **C10M 133/00**, C10M 133/04, C10M 133/38, C10M 133/52, C10L 1/22, C08F 8/32 // (C10N30/04, 70:00)

(21) Anmeldenummer: **87104371.7**

(22) Anmeldetag: **25.03.87**

(54) **Polybuten- und Polyisobutenamine, Verfahren zu deren Herstellung und diese enthaltende Kraft- und Schmierstoffzusammensetzungen.**

(30) Priorität: **04.04.86 DE 3611230**

(43) Veröffentlichungstag der Anmeldung: **11.11.87 Patentblatt 87/46**

(45) Bekanntmachung des Hinweises auf die Patenterteilung: **27.06.90 Patentblatt 90/26**

(84) Benannte Vertragsstaaten: **BE CH DE ES FR GB IT LI NL SE**

(56) Entgegenhaltungen:
**DE-A- 1 545 487**
**DE-A- 2 702 604**
**FR-A- 2 424 956**
**FR-A- 2 476 655**
**GB-A- 2 136 438**
**US-A- 4 134 844**
**US-A- 4 202 784**

(73) Patentinhaber: **BASF Aktiengesellschaft, Carl-Bosch-Strasse 38, D-6700 Ludwigshafen(DE)**

(72) Erfinder: **Kummer, Rudolf, Dr., Kreuzstrasse 6, D-6710 Frankenthal(DE)**
Erfinder: **Franz, Dieter, Dr., Horst-Schork-Strasse 75, D-6700 Ludwigshafen(DE)**
Erfinder: **Rath, Hans Peter, Dr., Friedhofstrasse 7, D-6718 Gruenstadt(DE)**

**EP 0 244 616 B1**

Anmerkung: Innerhalb von neun Monaten nach der Bekanntmachung des Hinweises auf die Erteilung des europäischen Patents im Europäischen Patentblatt kann jedermann beim Europäischen Patentamt gegen das erteilte europäische Patent Einspruch einlegen. Der Einspruch ist schriftlich einzureichen und zu begründen. Er gilt erst als eingelegt, wenn die Einspruchsgebühr entrichtet worden ist (Art. 99(1) Europäisches Patentübereinkommen).

## Beschreibung

Die Erfindung betrifft Kraft- und Schmierstoffzusammensetzungen, welche Polybuten- oder Polyisobutenamine enthalten. Die Erfindung betrifft weiterhin bestimmte Polybuten- oder Polyisobutenamine, sowie ein Verfahren zu deren Herstellung.

Polybutenamine un deren Verwendung als Kraftstoff- und Schmierstoffadditive sind schon sehr lange bekannt und beispielsweise in der US-A 3 275 554 und der DE-A 2 125 039 beschrieben.

Die Polybutenamine des Standes der Technik werden durch Halogenierung von Polybutenen und Umsetzung der Halogenide mit Aminen hergestellt. Bei der Herstellung dieser Produkte entsteht ionogenes Halogen, das möglichst weitgehend entfernt werden muß.

Es hat daher im Stand der Technik nicht an Versuchen gefehlt, die bekannten Produkte zu verbessern, zumal die Beseitigung des ionogenen Halogens nicht nur aufwendige Maßnahmen erfordert, sondern auch in den Umsetzungsprodukten stets beachtliche Halogenmengen verbleiben, vgl. DE-A 2 245 918.

In der DE-A 2 702 604 sind sogenannte reaktive Polyisobutene beschrieben, die mit Maleinsäureanhydrid (MSA) und Oligo- oder Polyaminen zu Mineralölhilfsmitteln umgesetzt werden können. Die so erhältlichen Mineralölhilfsmittel weisen den großen Vorteil auf, daß sie nahezu halogenfrei sind. Ein Nachteil ist die schwierige Anlagerung von MSA (en-Reaktion) verbunden mit einer Teerbildung, d.h. unerwünschte Nebenprodukte.

Der Erfindung liegt die Aufgabe zugrunde, Kraft- oder Schmierstoffzusammensetzungen zur Verfügung zu stellen, die die Ablagerungen im Einlaßsystem von Ottomotoren verhindern beziehungsweise eine besonders gute Dispersantwirkung aufweisen.

Diese Aufgabe wird gelöst mit einer Kraft- oder Schmierstoffzusammensetzung, die dadurch gekennzeichnet ist, daß sie mindestens ein Polybuten- oder Polyisobutenamin enthält, das der allgemeinen Formel I entspricht:

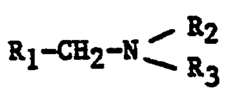

(I)

worin
$R_1$ einen von Isobuten und bis zu 20 Gew.-% n-Buten abgeleiteten Polybuten- oder Polyisobutenrest darstellt und
$R_2$ und $R_3$, die gleich oder verschieden sein können, für Wasserstoff, aliphatische oder aromatische Kohlenwasserstoffe, primäre oder sekundäre, aromatische oder aliphatische Aminoalkylenreste oder Polyaminoalkylenreste, Polyoxyalkylenreste, Heteroaryl- oder Heterocyclylreste stehen, oder gemeinsam mit dem Stickstoffatom, an das sie gebunden sind, einen Ring bilden, in dem noch weitere Heteroatome vorhanden sein können, und das durch Hydroformylierung eines Polybutens oder Polyisobutens und anschließende hydrierende Aminierung erhalten worden ist.

Nach einer bevorzugten Ausführungsform der Erfindung wird eine Kraft- oder Schmierstoffzusammensetzung mit einem Gehalt an Verbindungen der allgemeinen Formel I zur Verfügung gestellt, in der $R_1$ einen von Isobuten und bis zu 20 Gew.-% n-Buten abgeleiteten Polybuten- oder Polyisobutenrest darstellt und worin $R_2$ und $R_3$ gleich oder verschieden sind und jeweils Wasserstoff, Alkyl, Aryl, Hydroxyalkyl, einen Aminoalkylenrest der allgemeinen Formel II

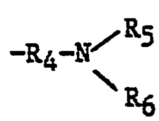

(II)

worin
$R_4$ für einen Alkylenrest steht und
$R_5$ und $R_6$, die gleich oder verschieden sind, für Wasserstoff, Alkyl, Aryl, Hydroxyalkyl oder einen Polybuten- oder Polyisobutenrest stehen, einen Polyaminoalkylenrest der allgemeinen Formel III

$$\left[-R_4-NR_5\right]_m R_6 \qquad (III)$$

worin die Reste $R_4$ jeweils gleich oder verschieden sind und die Reste
$R_5$ jeweils gleich oder verschieden sind und die Reste $R_4$, $R_5$ und $R_6$ die zuvor genannten Bedeutungen besitzen, und m für eine ganze Zahl von 2 bis 8 steht, oder
einen Polyoxyalkylenrest der allgemeinen Formel IV

$$\left[ R_4-O \right]_n-X \qquad (IV)$$

worin die Reste $R_4$ jeweils gleich oder verschieden sein können und die vorstehende Bedeutung besitzen, X für Alkyl oder H steht und n eine ganze Zahl zwischen 1 und 30 darstellt,
bedeuten, oder worin $R_2$ und $R_3$ zusammen mit dem Stickstoffatom, an das sie gebunden sind, einen Morpholinylrest, Pyridylrest, Piperidylrest, Pyrrolylrest, Pyrimidinylrest, Pyrrolinylrest, Pyrrolidinylrest, Pyrazinylrest oder Pyridazinylrest, darstellen.

Nach einer besonders bevorzugten Ausführungsform wird eine Kraft- oder Schmierstoffzusammensetzung mit einem Gehalt an Verbindungen der allgemeinen Formel I zur Verfügung gestellt:

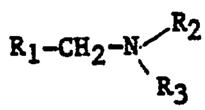

(I)

worin
$R_1$ einen von Isobuten und bis zu 20 Gew.-% n-Buten abgeleiteten Polybuten- oder Polyisobutenrest mit 20 bis 400 Kohlenstoffatomen darstellt, und
$R_2$ und $R_3$, die gleich oder verschieden sind, Wasserstoff, $C_1$–$C_{10}$-Alkyl, Phenyl, Naphthyl, $C_1$–$C_{10}$-Hydroxyalkyl, einen Aminoalkylenrest der allgemeinen Formel II

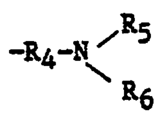

(II)

worin
$R_4$ für einen $C_2$–$C_{10}$-Alkylenrest steht und
$R_5$ und $R_6$, die gleich oder verschieden sind, für Wasserstoff, $C_1$–$C_{10}$-Alkyl, Phenyl, Naphthyl, $C_1$–$C_{10}$-Hydroxyalkyl oder einen Polybuten- oder Polyisobutenrest mit jeweils 20 bis 400 Kohlenstoffatomen stehen, einen Polyaminoalkylenrest der allgemeinen Formel III

$$\left[ R_4-NR_5 \right]_m R_6 \qquad (III)$$

worin
die Reste $R_4$ jeweils gleich oder verschieden sind,
die Reste $R_5$ jeweils gleich oder verschieden sind,
die Reste $R_4$, $R_5$ und $R_6$ die vorstehenden Bedeutungen besitzen und
m eine ganze Zahl von 2 bis 8 darstellt, oder
einen Polyoxyalkylenrest der allgemeinen Formel IV′

$$\left[ R_4-O \right]_n H \qquad (IV')$$

worin die Reste $R_4$ jeweils gleich oder verschieden sind und die vorstehende Bedeutung besitzen und n eine ganze Zahl zwischen 1 und 30 darstellt,
bedeuten, oder worin $R_2$ und $R_3$ zusammen mit dem Stickstoffatom, an das sie gebunden sind, einen Morpholinylrest darstellen.

Nach einer weiteren bevorzugten Ausführungsform wird eine Kraft- oder Schmierstoffzusammensetzung mit einem Gehalt an Verbindungen der allgemeinen Formel I bis IV′ zur Verfügung gestellt, worin der Rest $R_1$ einen von Isobuten und bis zu 20 Gew.-% n-Buten abgeleiteten Polybuten- oder Polyisobutenrest mit 32 bis 200 Kohlenstoffatomen darstellt, und
$R_2$ und $R_3$ gleich oder verschieden sind und Wasserstoff, Methyl, Ethyl, n-Propyl, i-Propyl, n-Butyl, sec.-Butyl, i-Butyl, tert.-Butyl, Pentyl, Hexyl, Phenyl,

$-CH_2-CH_2-NH_2$, 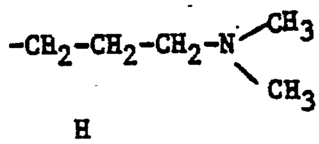 ,

H

$[-CH_2-CH_2-NH]_p\ CH_2-CH_2-NH_2$,

worin p für eine ganze Zahl von 1 bis 7, insbesondere 1 bis 3, steht, $-CH_2CH_2-OH$,

H

$[-CH_2-CH_2-O]_q CH_2-OH$,

worin q für eine ganze Zahl zwischen 1 und 30 steht, bedeuten, oder gemeinsam mit dem Stickstoffatom, an das sie gebunden sind, einen Morpholinylrest darstellen.

Da in Kraftstoffadditiven ca. 50 Gew.-% der Wirksubstanz durch Polyisobuten (PiB) ohne Verlust der Wirksamkeit ersetzt werden können, ist der Zusatz von PIB aus Kostengründen besonders vorteilhaft. Beim Polyisobuten kann es sich um ein solches mit einem Molekulargewicht $M_N$ von 300 bis 2000, vorzugsweise 500 bis 1500, handeln.

Sofern es sich bei der Erfindung um eine Kraftstoffzusammensetzung, d.h. also um einen Kraftstoff für Verbrennungsmotoren handelt, kann das Polybuten- oder Polyisobutenamin der allgemeinen Formel I beispielsweise in einer Menge von 10–2000 mg/kg, insbesondere 100–400 mg/kg Kraftstoff vorliegen.

In der erfindungsgemäßen Schmierstoffzusammensetzung kann das Polybuten- oder Polyisobutenamin beispielsweise in einer Menge von 0,5–5 Gew.-%, insbesondere 1–3 Gew.-%, bezogen auf das Gesamtgewicht der Zusammensetzung, vorliegen.

Die Erfindung betrifft auch Polybuten- oder Polyisobutenamine der allgemeinen Formel I

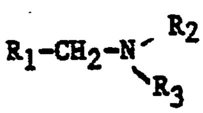 (I)

worin

$R_1$ einen von Isobuten und bis zu 20 Gew.-% n-Buten abgeleiteten Polybuten- oder Polyisobutenrest mit 20 bis 400 Kohlenstoffatomen darstellt, und

$R_2$ und $R_3$, die gleich oder verschieden sind, Wasserstoff, $C_1$–$C_{10}$-Alkyl, Phenyl, Naphthyl, $C_2$–$C_{10}$-Hydroxyalkyl, einen Aminoalkylenrest der allgemeinen Formel II

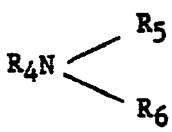 (II)

worin

$R_4$ für einen $C_1$–$C_{10}$-Alkylenrest und $R_5$ und $R_6$, die gleich oder verschieden sind, für Wasserstoff, $C_1$–$C_{10}$-Alkyl, Phenyl, Naphthyl, $C_2$–$C_{10}$-Hydroxyalkyl oder einen Polybuten oder Polyisobutenrest mit jeweils 20 bis 400 Kohlenstoffatomen stehen,

einen Polyaminoalkylenrest der allgemeinen Formel III

$$[-R_4-NR_5]_m R_6 \qquad (III)$$

worin

die Reste $R_4$ jeweils gleich oder verschieden sind, die Reste $R_5$ jeweils gleich oder verschieden sind, die Reste $R_4$, $R_5$ und $R_6$ die vorstehenden Bedeutungen besitzen und m eine ganze Zahl von 2 bis 8 darstellt, oder

einen Polyoxyalkylenrest der allgemeinen Formel IV'

$$\left[R_4{-}O\right]_n H \qquad (IV')$$

worin die Reste $R_4$ jeweils gleich oder verschieden sind und die vorstehende Bedeutung besitzen und n eine ganze Zahl zwischen 1 und 30 darstellt,

bedeuten, oder worin $R_2$ und $R_3$ zusammen mit dem Stickstoffatom, an das sie gebunden sind, einen Morpholinylrest darstellen, einzeln oder in Mischung untereinander.

Die Verbindungen der allgemeinen Formel I lassen sich über die Stufe der Verbindungen der allgemeinen Formel V dadurch herstellen, daß man ein entsprechendes Polybuten oder Polyisobuten mit einem Rhodium- oder Kobaltkatalysator in Gegenwart von CO und $H_2$ bei Temperaturen zwischen 80 und 200°C und $CO/H_2$-Drucken von bis zu 600 bar hydroformyliert und anschließend eine hydrierende Aminierung des Oxoprodukts durchführt. Die Aminierungsreaktion wird zweckmäßig bei Temperaturen von 80 – 200°C und Wasserstoffdrucken bis 600 bar, vorzugsweise 80–300 bar, durchgeführt.

Die so erhaltenen Produkte zeichnen sich gegenüber den durch Halogenierung von Polybutenen und Aminierung erhaltenen Produkten gemäß DE 1 545 487 durch Abwesenheit von Chlorverbindungen und verbesserte Wirksamkeit aus.

Bei dem Herstellungsverfahren wird zweckmäßigerweise ein geeignetes, inertes Lösungsmittel verwendet, um die Viskosität des Reaktionsgemisches herabzusetzen. Als Lösungsmittel sind vor allem schwefelarme aliphatische, cycloaliphatische- und aromatische Kohlenwasserstoffe geeignet. Besonders bevorzugt sind aliphatische Lösungsmittel, die frei von Schwefelverbindungen sind und weniger als 1% Aromaten enthalten. Sie haben den Vorteil, daß bei hohen Aminierungstemperaturen keine Hydrierwärme frei und kein Wasserstoff verbraucht wird. Bei der Aminierungs- und Hydroformylierungsreaktion liegt der Lösungsmittelgehalt je nach Viskosität des Polymeren und des Lösungsmittels zwischen 0 und 70 Gew.-%. Höhere Verdünnungen sind ebenso unwirtschaftlich wie ein Lösungsmittelaustausch zwischen Oxierung und Aminierung.

Beim erfindungsgemäßen Verfahren können ohne weiteres Polybutenumsätze von 80–90% erzielt werden. Die Polybutene, die überwiegend aus Isobuteneinheiten aufgebaut sind, (der Isobutenanteil liegt meist bei mehr als 80 Gew.-%) haben beispielsweise ein Molekulargewicht $M_N$ von 300–5000, vorzugsweise von 500–2500. Man kann erfindungsgemäß sogenannte reaktive Polybutene, insbesondere Polybuten A, B oder C, einsetzen. Unter einem reaktiven Polybuten versteht man ein ungesättigtes Polymer mit hoher chemischer Einheitlichkeit, wobei mehr als 10% der Doppelbindungen α-ständig sind. Einen Weg zur Herstellung solcher Polybutene beschreibt DE 2 702 604. Ein so hergestelltes Polymer enthält ca. 60% α-Olefin und 30% β-Olefin, trisubstituiert.

Mittelreaktive Polybutene werden meist durch Polymerisation von Isobuten oder isobutenhaltigen $C_4$-Schnitten mit aluminiumhaltigen Katalysatoren erhalten, sind chemisch weniger einheitlich und enthalten nur geringe Mengen α-Olefin, meist unter 10%. Die Signale im $C_{13}$-NMR zeigen den Unterschied. Der β-ständige, trisubstituierte, chemisch einheitliche Anteil beträgt beim Polybuten B etwa 40%, der α-Olefinanteil ca. 10%.

Das Polybuten A schließlich ist als wenig reaktiv zu bezeichnen und weist keine nennenswerten chemisch einheitlichen Anteile mehr auf.

Besonders geeignete Polybutene und Polyisobutene zur Herstellung der erfindungsgemäßen Polyamine der allgemeinen Formel I und der erfindungsgemäßen Alkohole der allgemeinen Formel V sind solche, die einen mittleren Polymerisationsgrad P von 10 bis 100 aufweisen und worin der Anteil E an Doppelbindungen, die zur Reaktion mit Maleinanhydrid befähigt sind, 60 bis 90% beträgt. Hierbei entspricht ein Wert E = 100% dem berechneten theoretischen Wert für den Fall, daß jedes Molekül des Buten- oder Isobutenpolymeren eine derart reaktive Doppelbindung enthält. Der Wert E wird berechnet für eine Reaktion des Polyisobutens mit Maleinanhydrid in einem Gewichtsverhältnis von 5:1 und 4-stündiges Erhitzen der Mischung unter Rühren auf 200°C. Weitere Einzelheiten hierzu finden sich in der GB-A 1 592 016, auf deren Offenbarung hier ausdrücklich Bezug genommen wird.

Die Polybutene sind Handelsprodukte.

Das bei der Hydroformylierung entstehende Oxoprodukt liegt normalerweise als Aldehyd/Alkoholgemisch vor. Es kann als Gemisch weiterverarbeitet oder aus Gründen der Lagerstabilität vorher durchhydriert werden. Durchhydrierte Produkte sind weniger reaktiv.

Gegenstand der Erfindung sind auch die bei der beschriebenen Hydroformylierung entstehenden Polybuten- oder Polyisobutenalkohole der allgemeinen Formel V

$$R_1{-}CH_2{-}OH \qquad (V)$$

worin $R_1$ einen von Isobuten und bis zu 20 Gew.-% n-Buten abgeleiteten Polybuten- oder Polyisobutenrest darstellt. Diese Verbindungen sind beispielsweise als Zwischenprodukte zur Herstellung der Verbindungen der allgemeinen Formel I brauchbar. Sie entstehen wie zuvor beschrieben, durch Hydroformylierung der zuvor erläuterten Polybutene. Besonders bevorzugt sind Polybuten- oder Polyisobutenalkohole der Formel V, worin der Rest $R_1$ 20 bis 400 Kohlenstoffatome aufweist.

Aus wirtschaftlichen Gründen sind Polybuten- oder Polyisobutenamine der allgemeinen Formel I, in der die Reste $R_2$ und $R_3$ jeweils für Wasserstoff stehen, für den Kraftstoffbereich, d.h. in den erfindungsgemäßen Kraftstoffzusammensetzungen, besonders als Ventilreinhaltendes oder -reinigendes Additiv geeignet. Die Dosierung der Polybuten- oder Polyisobutenamine der allgemeinen Formel I als Kraftstoffzusatz befragt zweckmäßig 10–2000 mg/kg, wobei ein Bereich von 50–800 mg/kg bevorzugt ist. Eine optimale Wirkung läßt sich im Bereich von 100–400 ppm als Zusatz zu Otto-Kraftstoff für Verbrennungsmotoren erzielen. Geringere Mengen lassen sich bei gleich guter Wirkung dosieren, wenn vor allem durch Einsatz von Polyaminen, beispielsweise von Dimethylaminopropylamin oder durch Einsatz von Polybuten- oder Polyisobutenaminen der allgemeinen Formel I mit niedrig molekularerem Polybuten- oder Polyisobuten-Anteil der Stickstoffgehalt höher ist und zusätzlich übliche Trägersubstanzen, beispielsweise Polybuten, Polybutenalkohol, Brightstock oder andere Mineralöle dosiert werden. Beim Einsatz von Polyaminen, wie Diethylentriamin bis Pentaethylenhexamin erhält man eher Vergaserdetergentiom oder sogenannte aschefreie Dispergatoren für Schmieröle.

Der Halogengehalt der erfindungsgemäßen Polybuten- oder Polyisobutenamine entspricht dem der Einsatzstoffe. Er liegt meist unter 30 mg/kg.

Soweit in den Verbindungen der allgemeinen Formel I Hydroxygruppen vorliegen, sind diese Verbindungen besonders interessant als Kraftstoffzusatz.

Die erfindungsgemäße Kraftstoff- oder Schmierstoffzusammensetzung weist gegenüber dem Stand der Technik eine Reihe von Vorteilen auf, wie beispielsweise die Tatsache, daß es sich um gesättigte Verbindungen handelt, daß keine Korrosionsprobleme auftreten, daß die Synthese kostengünstiger und umweltfreundlicher ist und daß keine Produktbelastung durch Chlor oder Brom auftritt.

Die Erfindung wird durch die nachstehenden Beispiele weiter erläutert.

Beispiel 1

500 g Polybuten mit Molgewicht $M_N$ = 950, 300 g Dodecan und 2,8 g Kobaltoctacarbonyl werden in einem 2,5 l Hubrührautoklaven bei 280 bar $CO/H_2$ 1:1 unter Rühren 5 Stunden auf 185°C erhitzt. Dann kühlt man auf Raumtemperatur ab und entfernt den Katalysator mit 400 ml 10%iger wäßriger Essigsäure. Anschließend wird neutral gewaschen. Man behandelt das so erhaltene Oxoprodukt mit 1 l Ammoniak sowie 300 g Ethanol und 100 g Raney-Kobalt in einem 5 l-Rollautoklaven mit 200 bar Wasserstoff bei 180°C 5 Stunden lang. Nach dem Abkühlen trennt man den Katalysator durch Filtrieren ab, verdampft das überschüssige Ammoniak und trennte das Lösungsmittel destillativ ab.

Bei dem in diesem Beispiel eingesetzten Polybuten handelt es sich um ein hochreaktives Polybuten C, das gemäß DE-A 2 702 604 hergestellt wurde.

Der Polybutenumsatz ist der nachstehenden Tabelle zu entnehmen.

Beispiel 2

Man arbeitet wie in Beispiel 1, wobei man die Hydroformylierung bei einer Temperatur von nur 120°C mit 0,5 g Rhodiumdicarbonylacetylacetonat als Katalysator durchführt. Anstelle des Ammoniaks verwendet man Dimethylaminopropylamin. Die Reaktionstemperatur der Aminierungsstufe beträgt nur 80°C. Da die Hydroformylierungsreaktion überwiegend in Richtung Aldehyd verläuft, ist die Umsetzung mit Dimethylaminopropylamin erleichtert. Das überschüssige Amin wird zusammen mit dem Lösungsmittel destillativ abgetrennt.

Beispiele 3, 4 und 5

Man arbeitet nach der allgemeinen Vorschrift des Beispiels 1, wobei man als Aminkomponente Dimethylaminopropylamin einsetzt. Als Polybuten verwendet man im Beispiel 3 ein wenig reaktives Polybuten (als Polybuten A bezeichnet), im Beispiel 4 wird ein mittelreaktives Polybuten B verwendet und im Beispiel 5 setzt man ein hochreaktives Polybuten C ein. Diese Polybutene weisen ein Molekulargewicht $M_N$ von 900–1000 auf. Wie in Beispiel 1 wird der Umsatz säulenchromatographisch präparativ über Kieselgel durch Gravimetrie der eingedampften Hexanfraktion, die nur umgesetztes Polybuten enthält, bestimmt. Die Reinheit dieser Fraktion wird durch Basenzahl und Stickstoffbestimmung sichergestellt.

Beispiel 6

Man arbeitet wie in Beispiel 1 beschrieben mit der Ausnahme, daß man 2,8 g Kobaltoctacarbonyl als Katalysator einsetzt. Bei der Aminkomponente handelt es sich um Tetraethylenpentamin.

Vergleichsbeispiele A und B

Die Produkte des Standes der Technik wurden durch Chlorierung von Polybuten C und Dehydrohalogenierung gemäß US-A-3 275 554, Beispiel 1, hergestellt. Im Falle des Vergleichsbeispiels B wurde beim

Syntheseweg über Polybutylenchlorid ein geringerer Umsatz als erfindungsgemäß erzielt, was in Übereinstimmung mit der DE-A-2 245 918 steht.

Die Brauchbarkeit der wie oben beschrieben hergestellten Substanzen wurde in Kraftstoffzusammensetzungen und Schmierstoffzusammensetzungen untersucht. Bei den Beispielen 1 bis 5 und dem Vergleichsbeispiel A handelt es sich um Untersuchungen am additivierten Kraftstoff, das Beispiel 6 und das Vergleichsbeispiel B betreffen Schmierstoffzusammensetzungen.

Die ventilreinigende Wirkung der additivierten Kraftstoffe wurde über Ventilablagerungen im Opel-Kadett 1,2 l-Motor nach genormter Prüfung gemäß CEC-Methode F-O2-C79 nach 40 Stunden beurteilt.

Die Dispersantwirkung für Schmieröle wurde mittels der Tüpfelmethode bestimmt, die von A. Schilling in "Les Huiles Pour Moteurs et le Graissage des Moteurs", Band 1, 1962, Seiten 89–90 beschrieben ist.

Den in der nachstehenden Tabelle zusammengestellten Daten läßt sich entnehmen, daß die erfindungsgemäße Kraft- oder Schmierstoffzusammensetzung dem Stand der Technik hinsichtlich ventilreinigender Wirkung bzw. Dispersantwirkung überlegen ist.

Tabelle

| Beispiel | Polybuten | Ausgangsamine | Syntheseweg | Hydroformylierungstemperatur | Umsatz (%) | Additivierung | Ventilablagerung (Grundwert 400 mg pro Ventil) | Dispersantbeurteilung gut = 600–800 |
|---|---|---|---|---|---|---|---|---|
| 1 | C | $NH_3$ | X | 185 | 81 | 300 ppm | 0 | – |
| 2 | C | Dimethylaminopropylamin | X | 120 | 59 | 300 ppm | 18 | – |
| 3 | A | Dimethylaminopropylamin | X | 185 | 36 | 300 ppm | 16 | – |
| 4 | B | Dimethylaminopropylamin | X | 185 | 52 | 300 ppm | 38 | – |
| 5 | C | Dimethylaminopropylamin | X | 185 | 73 | 300 ppm | 0 | – |
| Vergleichsbeisp. A | C | Dimethylaminopropylamin | Y | – | 55 | 300 ppm | 56 | – |
| 6 | C | Tetraethylenpentamin | X | 120 | 60 | 3% | – | 780 |
| Vergleichsbeisp. B | C | Tetraethylenpentamin | Y | – | 39 | 3% | – | 540 |

X = erfindungsgemäß
Y = gemäß US-A 4 275 554

**Patentansprüche für die Vertragsstaaten: BE, CH, DE, FR, GB, IT, LI, NL, SE**

1. Kraft- oder Schmierstoffzusammensetzung, dadurch gekennzeichnet, daß sie mindestens ein Polybuten- oder Polyisobutenamin enthält, daß der allgemeinen Formel I entspricht:

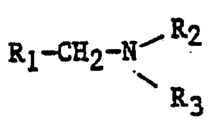

(I)

worin

$R_1$ einen von Isobuten und bis zu 20 Gew.-% n-Buten abgeleiteten Polybuten- oder Polyisobutenrest darstellt und

$R_2$ und $R_3$, die gleich oder verschieden sein können, für Wasserstoff, aliphatische oder aromatische Kohlenwasserstoffreste, primäre oder sekundäre, aromatische oder aliphatische Aminoalkylenreste oder Polyaminoalkylenreste, Polyoxyalkylenreste, Heteroaryl- oder Heterocyclylreste stehen können, oder gemeinsam mit dem Stickstoffatom, an das sie gebunden sind, einen Ring bilden, in dem noch weitere Heteroatome vorhanden sein können, und das durch Hydroformylierung eines Polybutens oder Polyisobutens und anschließende hydrierende Aminierung erhalten worden ist.

2. Kraft- oder Schmierstoffzusammensetzung nach Anspruch 1, worin $R_1$ die in Anspruch 1 angegebene Bedeutung besitzt und $R_2$ und $R_3$ gleich oder verschieden sind und jeweils Wasserstoff, Alkyl, Aryl, Hydroxyalkyl, einen Aminoalkylenrest der allgemeinen Formel II

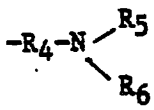

(II)

worin
$R_4$ für einen Alkylenrest steht und
$R_5$ und $R_6$, die gleich oder verschieden sind, für Wasserstoff, Alkyl, Aryl, Hydroxyalkyl oder Polybuten oder Polyisobutenrest stehen, einen Polyaminoalkylenrest der allgemeinen Formel III

$$\left[-R_4-NR_5\right]_m R_6 \qquad \text{(III)}$$

worin die Reste $R_4$ jeweils gleich oder verschieden sind und die Reste $R_5$ jeweils gleich oder verschieden sind und die Reste $R_4$, $R_5$ und $R_6$ die zuvor genannten Bedeutungen besitzen, und m für eine ganze Zahl von 2 bis 8 steht, oder einen Polyoxyalkylenrest der allgemeinen Formel IV

$$\left[-R_4-O\right]_n-X \qquad \text{(IV)}$$

worin die Reste $R_4$ jeweils gleich oder verschieden sein können und die vorstehende Bedeutung besitzen, X für Alkyl oder H steht und n eine ganze Zahl zwischen 1 und 30 darstellt, bedeuten, oder worin $R_2$ und $R_3$ zusammen mit dem Stickstoffatom, an das sie gebunden sind, einen Morpholinylrest, Pyridylrest, Piperidylrest, Pyrrolylrest, Pyrimidinylrest, Pyrrolinylrest, Pyrrolidinylrest, Pyrazinylrest oder Pyridazinylrest, darstellen.

3. Kraft- oder Schmierstoffzusammensetzung nach Anspruch 1 der allgemeinen Formel I

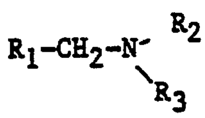

(I)

worin
$R_1$ einen von Isobuten und bis zu 20 Gew.-% n-Buten abgeleiteten Polybuten- oder Polyisobutenrest mit 20 bis 400 Kohlenstoffatomen darstellt, und $R_2$ und $R_3$, die gleich oder verschieden sind, Wasserstoff, $C_1$–$C_{10}$-Alkyl, Phenyl, Naphthyl, $C_2$–$C_{10}$-Hydroxyalkyl, einen Amionalkylenrest der allgemeinen Formel II

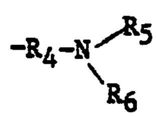

(II)

worin
$R_4$ für einen $C_1$–$C_{10}$-Alkylenrest und $R_5$ und $R_6$, die gleich oder verschieden sind, für Wasserstoff, $C_1$–$C_{10}$-Alkyl, Phenyl, Naphthyl, $C_2$–$C_{10}$-Hydroxyalkyl oder einen Polybuten oder Polyisobutenrest mit jeweils 20 bis 400 Kohlenstoffatomen stehen, einen Polyaminoalkylenrest der allgemeinen Formel III

$$\left[-R_4-NR_5\right]_m R_6 \qquad \text{(III)}$$

worin
die Reste $R_4$ jeweils gleich oder verschieden sind, die Reste $R_5$ jeweils gleich oder verschieden sind, die Reste $R_4$, $R_5$ und $R_6$ die vorstehenden Bedeutungen besitzen und m eine ganze Zahl von 2 bis 8 darstellt, oder einen Polyoxyalkylenrest der allgemeinen Formel IV'

$$\left[R_4-O\right]_nH \qquad (IV')$$

worin

die Reste $R_4$ jeweils gleich oder verschieden sind und die vorstehende Bedeutung besitzen und n eine ganze Zahl zwischen 1 und 30 darstellt,

bedeuten, oder worin $R_2$ und $R_3$ zusammen mit dem Stickstoffatom, an das sie gebunden sind, einen Morpholinylrest darstellen.

4. Kraft- oder Schmierstoffzusammensetzung der allgemeinen Formeln I bis IV' nach Anspruch 3, worin der Rest $R_1$ einen von Isobuten und bis zu 20 Gew.-% n-Buten abgeleiteten Polybuten- oder Polyisobutenrest mit 35 bis 200 Kohlenstoffatomen darstellt, und

$R_2$ und $R_3$ gleich oder verschieden sind und Wasserstoff, Methyl, Ethyl, n-Propyl, i-Propyl, n-Butyl, sec.-Butyl, i-Butyl, tert-.Butyl, Pentyl, Hexyl, Phenyl,

$$-CH_2-CH_2-NH_2,\ -CH_2-CH_2-CH_2-N\langle^{CH_3}_{CH_3},$$

$$\left[CH_2-CH_2-NH\right]_pCH_2-CH_2-NH_2,$$

worin p für eine ganze Zahl von 1 bis 7, insbesondere 1 bis 3, steht, $-CH_2-CH_2-OH$,

$$\left[CH_2-CH_2-O\right]_qCH_2-OH,$$

worin q für eine ganze Zahl zwischen 1 und 30 steht, bedeuten, oder gemeinsam mit dem Stickstoffatom, an das sie gebunden sind, einen Morpholinylrest darstellen.

5. Kraftstoffzusammensetzung nach einem der Ansprüche 1 bis 4, dadurch gekennzeichnet, daß sie das Polybuten- oder Polyisobutenamin in einer Menge von 10 bis 2000 ppm, insbesondere 100 bis 400 ppm, bezogen auf das Gesamtgewicht der Zusammensetzung, enthält.

6. Schmierstoffzusammensetzung nach einem der Ansprüche 1 bis 4, dadurch gekennzeichnet, daß sie das Polybuten- oder Polyisobutenamin in einer Menge von 0,5 bis 5 Gew.-%, insbesondere 1 bis 3 Gew.-%, bezogen auf das Gesamtgewicht der Zusammensetzung, enthält.

7. Polybuten- oder Polyisobutenamine der allgemeinen Formel I

$$R_1-CH_2-N\langle^{R_2}_{R_3} \qquad (I)$$

worin

$R_1$ einen von Isobuten und bis zu 20 Gew.-% n-Buten abgeleiteten Polybuten- oder Polyisobutenrest mit 20 bis 400 Kohlenstoffatomen darstellt, und

$R_2$ und $R_3$, die gleich oder verschieden sind, Wasserstoff, $C_1$–$C_{10}$-Alkyl, Phenyl, Naphthyl, $C_1$–$C_{10}$-Hydroxyalkyl, einen Aminoalkylenrest der allgemeinen Formel II

$$-R_4-N\langle^{R_5}_{R_6} \qquad (II)$$

worin

$R_4$ für einen $C_1$–$C_{10}$-Alkylenrest und $R_5$ und $R_6$, die gleich oder verschieden sind, für Wasserstoff, $C_1$–$C_{10}$-Alkyl, Phenyl, Naphthyl, $C_1$–$C_{10}$-Hydroxyalkyl oder einen Polybuten oder Polyisobutenrest mit jeweils 20 bis 400 Kohlenstoffatomen stehen, einen Polyaminoalkylenrest der allgemeinen Formel III

$$\left[R_4-NR_5\right]_mR_6 \qquad (III)$$

worin
die Reste $R_4$ jeweils gleich oder verschieden sind, die Reste $R_5$ jeweils gleich oder verschieden sind, die Reste $R_4$, $R_5$ und $R_6$ die vorstehenden Bedeutungen besitzen und m eine ganze Zahl von 1 bis 7 darstellt, oder einen Polyoxyalkylenrest der allgemeinen Formel IV'

$$-[R_4-O]_n H \qquad (IV')$$

worin
die Reste $R_4$ jeweils gleich oder verschieden sind und die vorstehende Bedeutung besitzen und n eine ganze Zahl zwischen 1 und 30 darstellt,
bedeuten, oder worin $R_2$ und $R_3$ zusammen mit dem Stickstoffatom, an das sie gebunden sind, einen Morpholinylrest darstellen, einzeln oder in Mischung untereinander.

8. Verwendung der Polybuten- oder Polyisobutenamine nach der allgemeinen Formel I gemäß Anspruch 7 in Kraft- oder Schmierstoffzusammensetzungen für Verbrennungsmotoren.

9. Verfahren zur Herstellung der Polybuten- oder Polyisobutenamine der allgemeinen Formel I gemäß Anspruch 7, dadurch gekennzeichnet, daß man ein Polybuten oder Polyisobuten mit einem Rhodium- oder Kobaltkatalysator in Gegenwart von CO und $H_2$ bei Temperaturen zwischen 80 und 200°C und $CO/H_2$-Drucken von bis zu 600 bar hydroformyliert und anschließend eine Mannichreaktion oder hydrierende Aminierung des Oxoprodukts durchführt.

10. Polybuten- oder Polyisobutenalkohole der allgemeinen Formel V:

$R_1$-$CH_2$-OH (V)

worin $R_1$ einen von Isobuten und bis zu 20 Gew.-% n-Buten abgeleiteten Polybuten- oder Polyisobutenrest darstellt.

11. Polybuten- oder Polyisobutenalkohole der allgemeinen Formel V nach Anspruch 10, worin der Rest $R_1$ 20 bis 400 Kohlenstoffatome aufweist.

**Patentansprüche für den Vertragsstaat : ES**

1. Verfahren zur Herstellung von Polybuten- oder Polyisobutenaminen, dadurch gekennzeichnet, daß man zur Gewinnung von Polybutyl- oder Polyisobutenaminen der allgemeinen Formel I

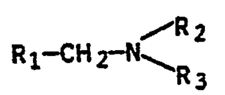

(I) ,

worin
$R_1$ einen von Isobuten und bis zu 20 Gew.–% n-Buten abgeleiteten Polybuten- oder Polyisobutenrest darstellt und
$R_2$ und $R_3$, die gleich oder verschieden sein können, für Wasserstoff, aliphatische oder aromatische Kohlenwasserstoffreste, primäre und sekundäre, aromatische oder aliphatische Aminoalkylenreste oder Polyaminoalkylenreste, Polyoxyalkylenreste, Heteroaryl- oder Heterocyclylreste stehen können, oder gemeinsam mit dem Stickstoffatom, an das sie gebunden sind, einen Ring bilden, in dem noch weitere Heteroatome vorhanden sein können,
ein Polybuten oder Polyisobuten mit einem Rhodium- oder Kobaltkatalysator in Gegenwart von CO und $H_2$ bei Temperaturen zwischen 80 und 200°C und $CO/H_2$-Drucken von bis zu 600 bar hydroformyliert und anschließend eine hydrierende Aminierung des Oxoprodukts durchführt.

2. Verfahren zur Herstellung von Polybuten- oder Polyisobutenaminen der Formel (I) gemäß Anspruch 1, dadurch gekennzeichnet, daß in der Formel (I) $R_1$ die angegebene Bedeutung besitzt und $R_2$ und $R_3$ gleich oder verschieden sind und jeweils Wasserstoff, Alkyl, Aryl, Hydroxyalkyl, einen Aminoalkylenrest der allgemeinen Formel II

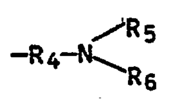

(II),

worin
$R_4$ für einen Alkylenrest steht und
$R_5$ und $R_6$, die gleich oder verschieden sind, für Wasserstoff, Alkyl, Aryl, Hydroxyalkyl oder einen Polybuten oder Polyisobutenrest stehen, einen Polyaminoalkylenrest der allgemeinen Formel III

$$\left[-R_4-NR_5\right]_m R_6 \qquad (III),$$

worin die Reste $R_4$ jeweils gleich oder verschieden sind und die Reste $R_5$ jeweils gleich oder verschieden sind und die Reste $R_4$, $R_5$ und $R_6$ die zuvor genannten Bedeutungen besitzen, und m für eine ganze Zahl von 2 bis 8 steht, oder
einen Polyoxyalkylenrest der allgemeinen Formel IV

$$\left[-R_4-O\right]_n-X \qquad (IV),$$

worin die Reste $R_4$ jeweils gleich oder verschieden sein können und die vorstehende Bedeutung besitzen, X für Alkyl oder H steht und n eine ganze Zahl zwischen 1 und 30 darstellt,
bedeuten, oder worin $R_2$ und $R_3$ zusammen mit dem Stickstoffatom, an das sie gebunden sind, einen Morpholinylrest, Pyridylrest, Piperidylrest, Pyrrolylrest, Pyrimidinylrest, Pyrrolinylrest, Pyrrolidinylrest, Pyrazinylrest oder Pyridazinylrest, darstellen.

3. Verfahren zur Herstellung von Polybuten- oder Polyisobutenaminen der Formel (I) gemäß Anspruch 1, dadurch gekennzeichnet, daß in der Formel (I)
$R_1$ einen von Isobuten und bis zu 20 Gew.–% n-Buten abgeleiteten Polybutyl- oder Polyisobutylrest mit 20 bis 400 Kohlenstoffatomen darstellt, und $R_2$ und $R_3$, die gleich oder verschieden sind, Wasserstoff, $C_1$–$C_{10}$-Alkyl, Phenyl, Naphthyl, $C_2$–$C_{10}$-Hydroxyalkyl, einen Aminoalkylenrest der allgemeinen Formel II

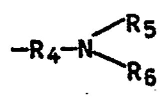

(II),

worin
$R_4$ für einen $C_1$–$C_{10}$-Alkylenrest und $R_5$ und $R_6$, die gleich oder verschieden sind, für Wasserstoff, $C_1$–$C_{10}$-Alkyl, Phenyl, Naphthyl, $C_2$–$C_{10}$-Hydroxyalkyl oder einen Polybuten- oder Polyisobutenrest mit jeweils 20 bis 400 Kohlenstoffatomen stehen,
einen Polyaminoalkylenrest der allgemeinen Formel III

$$\left[-R_4-NR_5\right]_m R_6 \qquad (III),$$

worin
die Reste $R_4$ jeweils gleich oder verschieden sind, die Reste $R_5$ jeweils gleich oder verschieden sind, die Reste $R_4$, $R_5$ und $R_6$ die vorstehenden Bedeutungen besitzen und m eine ganze Zahl von 2 bis 8 darstellt, oder
einen Polyoxyalkylenrest der allgemeinen Formel IV'

$$\left[-R_4-O\right]_n-H \qquad (IV'),$$

worin
die Reste $R_4$ jeweils gleich oder verschieden sind und die vorstehende Bedeutung besitzen und n eine ganze Zahl zwischen 1 und 30 darstellt,
bedeuten, oder worin $R_2$ und $R_3$ zusammen mit dem Stickstoffatom, an das sie gebunden sind, einen Morpholinylrest darstellen.

4. Verfahren zur Herstellung von Polybuten- oder Polyisobutenaminen der Formel (I) gemäß Anspruch 1, dadurch gekennzeichnet, daß in der Formel (I) der Rest $R_1$ einen von Isobuten und bis zu 20 Gew.–% n-Buten abgeleiteten Polybuten- oder Polyisobutenrest mit 35 bis 200 Kohlenstoffatomen darstellt, und $R_2$ und $R_3$ gleich oder verschieden sind und Wasserstoff, Methyl, Ethyl, n-Propyl, i-Propyl, n-Butyl, sec.-Butyl, i-Butyl, tert.-Butyl, Pentyl, Hexyl, Phenyl,

$-CH_2-CH_2-NH_2$, 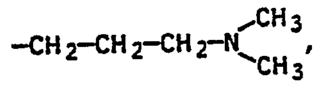

$-(CH_2-CH_2-NH)_p-CH_2-CH_2-NH_2$,

worin p für eine ganze Zahl von 1 bis 7, insbesondere 1 bis 3, steht, $-CH_2-CH_2-OH$,

$$-(CH_2-CH_2-O)_q-CH_2-OH,$$

worin q für eine ganze Zahl zwischen 1 und 30 steht, bedeuten, oder gemeinsam mit dem Stickstoffatom, an das sie gebunden sind, einen Morpholinylrest darstellen.

**Claims for the Contracting States: BE, CH, DE, FR, GB, IT, LI, NL, SE**

1. A fuel or lubricant composition which contains one or more polybutene- or polyisobuteneamines of the general formula I

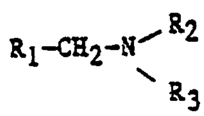 (I).

where $R_1$ is a polybutene or polyisobutene radical derived from isobutene and up to 20% by weight of n-butene and $R_2$ and $R_3$ may be identical or different and are each hydrogen, an aliphatic or aromatic hydrocarbon, a primary or secondary, aromatic or aliphatic aminoalkylene radical or polyaminoalkylene radical, a polyoxyalkylene radical or a hetaryl or heterocyclyl radical, or, together with the nitrogen atom to which they are bonded, form a ring in which further hetero atoms may be present, and which has been obtained by hydroformylation of a polybutene or polyisobutene and subsequent reductive amination.

2. A fuel or lubricant composition as claimed in claim 1, wherein $R_1$ has the meanings given in claim 1 and $R_2$ and $R_3$ are identical or different and are each hydrogen, alkyl, aryl, hydroxyalkyl, an aminoalkylene radical of the general formula II

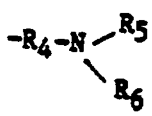 (II)

where $R_4$ is alkylene and $R_5$ and $R_6$ are identical or different and are each hydrogen, alkyl, aryl, hydroxyalkyl or polybutyl or polyisobutyl,
a polyaminoalkylene radical of the general formula III

$$[-R_4-NR_5]_m R_6 \qquad (III)$$

where the radicals $R_4$ are identical or different and $R_4$, $R_5$ and $R_6$ have the above meanings and m is an integer from 2 to 8, or a polyoxyalkylene radical of the general formula IV

$$[-R_4-O]_n-X \qquad (IV)$$

where the radicals $R_4$ may be identical or different and have the above meanings, X is alkyl or H, and n is an integer from 1 to 30,
or where $R_2$ and $R_3$, together with the nitrogen atom to which they are bonded, form a morpholinyl, pyridyl, piperidyl, pyrrolyl, pyrimidinyl, pyrrolinyl, pyrrolidinyl, pyrazinyl or pyridazinyl radical.

3. A fuel or lubricant composition as claimed in claim 1 of the general formula I

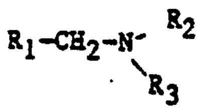

(I)

where $R_1$ is a polybutene or polyisobutene radical of 20 to 400 carbon atoms which is derived from isobutene and up to 20% by weight of n-butene, and $R_2$ and $R_3$ are identical or different and are each hydrogen, $C_1$–$C_{10}$-Alkyl, phenyl, naphthyl, $C_2$–$C_{10}$-hydroxyalkyl, an aminoalkylene radical of the general formula II

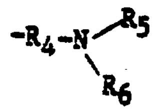

(II)

where $R_4$ is $C_1$–$C_{10}$-alkylene and $R_5$ and $R_6$ are identical or different and are each hydrogen, $C_1$–$C_{10}$-alkyl, phenyl, naphthyl, $C_2$–$C_{10}$-hydroxyalkyl or polybutene or polyisobutene, each of 20 to 400 carbon atoms, a polyaminoalkylene radical of the general formula III

$$\left[-R_4-NR_5-\right]_m R_6 \qquad (III)$$

where the radicals $R_4$ are identical or different, the radicals $R_5$ are identical or different and $R_4$, $R_5$ and $R_6$ have the above meanings and m is an integer from 2 to 8,
or
a polyoxyalkylene radical of the general formula IV′

$$\left[-R_4-O-\right]_n H \qquad (IV')$$

where the radicals $R_4$ are identical or different and have the above meanings and n is an integer from 1 to 30, or where $R_2$ and $R_3$, together with the nitrogen atom to which they are bonded, form a morpholinyl radical.

4. A fuel or lubricant composition of the general formulae I to IV′ as claimed in claim 3 wherein $R_1$ is a polybutene or polyisobutene radical of 35 to 200 carbon atoms which is derived from isobutene and up to 20% by weight of n-butene, and $R_2$ and $R_3$ are identical or different and are each hydrogen, methyl, ethyl, n-propyl, isopropyl, n-butyl, sec-butyl, isobutyl, tert-butyl, pentyl, hexyl, phenyl, $-CH_2-CH_2-NH_2$,

;

or

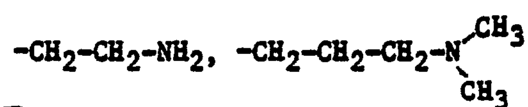

$$\left[-CH_2-CH_2-NH-\right]_p CH_2-CH_2-NH_2$$

where p is an integer from 1 to 7, in particular from 1 to 3, $-CH_2-CH_2-OH$,

$$\left[-CH_2-CH_2-O-\right]_q CH_2-OH,$$

where q is an integer from 1 to 30, or, together with the nitrogen atom to which they are bonded, form a morpholinyl radical.

5. A fuel composition as claimed in any of claims 1 to 4, which contains the polybutene or polyisobuteneamine in an amount of from 10 to 2,000 ppm, in particular from 100 to 400 ppm, based on the total weight of the composition.

6. A lubricant composition as claimed in any of claims 1 to 4, which contains the polybutene or polyisobutene in an amount of from 0.5 to 5, in particular from 1 to 3, % by weight, based on the total weight of composition.

7. A polybutene or polyisobutene of the general formula I

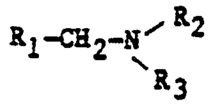

(I)

where $R_1$ is a polybutene or polyisobutene radical of 20 to 400 carbon atoms which is derived from isobutene and up to 20% by weight of n-butene, and $R_2$ and $R_3$ are identical or different and are each hydrogen, $C_1$–$C_{10}$-alkyl, phenyl, naphthyl, $C_1$–$C_{10}$-hydroxyalkyl, an aminoalkylene radical of the general formula II

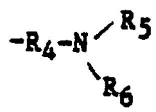

(II)

where $R_4$ is $C_1$–$C_{10}$-alkylene and $R_5$ and $R_6$ are identical or different and are each hydrogen, $C_1$–$C_{10}$-alkyl, phenyl, naphthyl, $C_1$–$C_{10}$-hydroxyalkyl or polybutene or polyisobutene, each of 20 to 400 carbon atoms,
a polyaminoalkylene radical of the general formula III

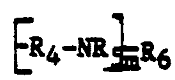

(III)

where the radicals $R_4$ are identical or different, the radicals $R_5$ are identical or different and $R_4$, $R_5$ and $R_6$ have the above meanings and m is an integer from 1 to 7, or
a polyoxyalkylene radical of the general formula IV′

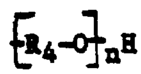

(IV′)

where the radicals $R_4$ are identical or different and have the above meanings and n is an integer from 1 to 30, or where $R_2$ and $R_3$, together with the nitrogen atom to which they are bonded, form a morpholinyl radical, individually or as a mixture with one another.

8. Use of a polybutene- or polyisobuteneamine of the general formula I as claimed in claim 7 in fuel or lubricant compositions for internal combustion engines.

9. A process for the preparation of a polybutene- or polyisobuteneamine of the general formula I as claimed in claim 7, wherein the polybutene or polyisobutene is hydroformylated with a rhodium or cobalt catalyst in the presence of CO and $H_2$ at from 80 to 200°C and under a $CO/H_2$ pressure of up to 600 bar and the oxo product is then subjected to a Mannich reaction or amination under hydrogenating conditions.

10. A polybutene or polyisobutene alcohol of the general formula V

$R_1$–$CH_2$–OH (V)

where $R_1$ is a polybutene or polyisobutene radical derived from isobutene and up to 20% by weight of n-butene.

11. A polybutene or polyisobutene alcohol of the general formula V as claimed in claim 10, wherein the radical $R_1$ is of 20 to 400 carbon atoms.

**Claims for the Contracting State: ES**

1. A process for the preparation of a polybutene- or polyisobuteneamine, wherein the polybutene- or polyisobuteneamine of the general formula I

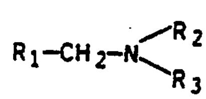

(I)

where R1 is a polybutene or polyisobutene radical derived from isobutene and up to 20% by weight of n-butene and $R_2$ and $R_3$ may be identical or different and are each hydrogen, an aliphatic or aromatic

hydrocarbon radical, a primary or secondary, aromatic or aliphatic aminoalkylene radical or polyaminoalkylene radical, a polyoxyalkylene radical or a hetaryl or heterocyclyl radical, or, together with the nitrogen atom to which they are bonded, form a ring in which further hetero atoms may be present, is obtained by hydroformylating a polybutene or polyisobutene with a rhodium or cobalt catalyst in the presence of CO and $H_2$ at from 80 to 200°C and $CO/H_2$ pressures of up to 600 bar and subsequently subjecting the oxo product to amination under hydrogenating conditions.

2. A process for the preparation of a polybutene- or polyisobuteneamine of the formula (I) as claimed in claim 1, wherein in the formula (I) $R_1$ has the meanings given and $R_2$ and $R_2$ are identical or different and are each hydrogen, alkyl, aryl, hydroxyalkyl, an aminoalkylene radical of the general formula II

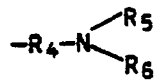

(II)

where $R_4$ is alkylene and $R_5$ and $R_6$ are identical or different and are each hydrogen, alkyl, aryl, hydroxyalkyl or polybutyl or polyisobutyl,
a polyaminoalkylene radical of the general formula III

$$\left[-R_4-NR_5\right]_m R_6 \qquad (III)$$

where the radicals $R_4$ are identical or different and the radicals $R_5$ are identical or different and $R_4$, $R_5$ and $R_6$ have the above meanings and m is an integer from 2 to 8, or a polyoxyalkylene radical of the general formula IV

$$\left[-R_4-O\right]_n-X \qquad (IV)$$

where the radicals $R_4$ may be identical or different and have the above meanings, X is alkyl or H, and n is an integer from 1 to 30,
or where $R_2$ and $R_3$, together with the nitrogen atom to which they are bonded, form a morpholinyl, pyridyl, piperidyl, pyrrolyl, pyrimidinyl, pyrrolinyl, pyrrolidinyl, pyrazinyl or pyridazinyl radical.

3. A process for the preparation of a polybutene- or polyisobuteneamine of the formula (I) as claimed in claim 1, wherein, in the formula (I), $R_1$ is a polybutyl or polyisobutyl radical of 20 to 400 carbon atoms which is derived from isobutene and up to 20% by weight of n-butene, $R_2$ and $R_3$ are identical or different and are each hydrogen, $C_1$–$C_{10}$-alkyl, phenyl, naphthyl, $C_2$–$C_{10}$-hydroxyalkyl, an aminoalkylene radical of the general formula II

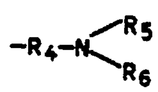

(II)

where $R_4$ is $C_1$–$C_{10}$-alkylene and $R_5$ and $R_6$ are identical or different and are each hydrogen, $C_1$–$C_{10}$-alkyl, phenyl, naphthyl, $C_2$–$C_{10}$-hydroxyalkyl or polybutyl or polyisobutyl, each of 20 to 400 carbon atoms,
a polyaminoalkylene radical of the general formula III

$$\left[-R_4-NR_5\right]_m R_6 \qquad (III)$$

where the radicals $R_4$ are identical or different, the radicals $R_5$ are identical or different and $R_4$, $R_5$ and $R_6$ have the above meanings and m is an integer from 2 to 8, or
a polyoxyalkylene radical of the general formula IV'

$$\left[-R_4-O\right]_n-H \qquad (IV')$$

where the radicals $R_4$ are identical or different and have the above meanings and n is an integer from 1

to 30, or where $R_2$ and $R_3$, together with the nitrogen atom to which they are bonded, form a morpholinyl radical.

4. A process for the preparation of a polybutene- or polyisobuteneamine of the formula (I) as claimed in claim 1, wherein, in the formula (I), $R_1$ is a polybutene or polyisobutene radical of 35 to 200 carbon atoms which is derived from isobutene and up to 20% by weight of n-butene, and $R_2$ and $R_3$ are identical or different and are each hydrogen, methyl, ethyl, n-propyl, isopropyl, n-butyl, sec-butyl, isobutyl, tert-butyl, pentyl, hexyl, phenyl, $-CH_2-CH_2-NH_2$,

$-CH_2-CH_2-NH_2$, 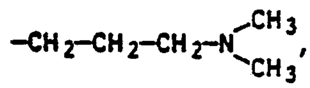 ,

$-(CH_2-CH_2-NH)_p-CH_2-CH_2-NH_2$,

where p is an integer from 1 to 7, in particular from 1 to 3,

$$-CH_2-CH_2-OH, -(CH_2-CH_2-O)_q-CH_2-OH$$

where q is an integer from 1 to 30, or, together with the nitrogen atom to which they are bonded, form a morpholinyl radical.

**Revendications pour les Etats contractants: BE, CH, DE, FR, GB, IT, LI, NL, SE**

1. Composition de combustible ou de lubrifiant, caractérisée en ce qu'elle contient une polybutène- ou polyisobutène-amine qui répond à la formule générale I

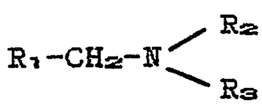 (I)

dans laquelle

$R_1$ représente un reste polybutène ou polyisobutène dérivé d'isobutène et, pour une proportion allant jusqu'à 20% en poids, de n-butène, et

$R_2$ et $R_3$, qui peuvent être identiques ou différents, peuvent être mis pour des atomes d'hydrogène, des restes hydrocarbonés aliphatiques ou aromatiques, des restes aminoalkylène ou des restes polyaminoalkylène, primaires ou secondaires, aromatiques ou aliphatiques, des restes polyoxyalkylène, des restes hétéroaryle ou hétérocycliques, ou forment ensemble, avec l'atome d'azote auquel ils sont fixés, un noyau dans lequel d'autres hétéroatomes encore peuvent être présents,

et qui a été obtenue par hydroformylation d'un polybutène ou d'un polyisobutène, suivie d'amination réductrice.

2. Composition de combustible ou de lubrifiant selon la revendication 1, dans laquelle $R_1$ a la signification donnée dans la revendication 1 et $R_2$ et $R_3$ sont identiques ou différents et représentent chacun un atome d'hydrogène, un reste alkyle, aryle, hydroxyalkyle, un reste aminoalkylène de formule générale II

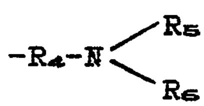 (II)

dans laquelle

$R_4$ est mis pour un reste alkylène et

$R_5$ et $R_6$, qui sont identiques ou différents, sont mis chacun pour un atome d'hydrogène ou pour un reste alkyle, aryle, hydroxyalkyle, polybutyle ou polyisobutyle,

un reste polyaminoalkylène de formule générale III

$$-[R_4-NR_5]_m-R_6 \quad (III)$$

dans laquelle

les restes $R_4$ sont chaque fois identiques ou différents,

les restes $R_5$ sont chaque fois identiques ou différents,
les restes $R_4$, $R_5$ et $R_6$ ont les significations données précédemment et
m est mis pour un nombre entier de 2 à 8, ou
un reste polyoxyalkylène de formule générale IV

$$-[-R_4-O]_n-X \qquad (IV)$$

dans laquelle
les restes $R_4$ peuvent être chaque fois identiques ou différents et ont les significations précédentes,
X est mis pour un radical alkyle ou H et
n est un nombre entier entre 1 et 30,
ou dans laquelle $R_2$ et $R_3$ forment ensemble, avec l'atome d'azote auquel ils sont fixés, un reste morpholinyle, un reste pyridyle, un reste pipéridyle, un reste pyrrolyle, un reste pyrimidinyle, un reste pyrrolinyle, un reste pyrrolidinyle, un reste pyrazinyle ou un reste pyridazinyle.

3. Composition de combustible ou de lubrifiant selon la revendication 1 de formule générale

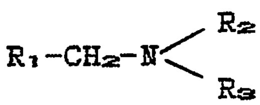

(I)

dans laquelle
$R_1$ représente un reste polybutène ou polyisobutène à 20–400 atomes de carbone, dérivé d'isobutène et, pour une proportion allant jusqu'à 20% en poids, de n-butène et
$R_2$ et $R_3$, qui sont identiques ou différents, représentent chacun un atome d'hydrogène, un reste alkyle en $C_1$ à $C_{10}$, phényle, naphtyle, hydroxyalkyle en $C_2$ à $C_{10}$, un reste aminoalkylène de formule générale II

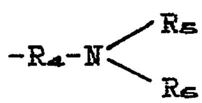

(II)

dans laquelle
$R_4$ est mis pour un radical alkylène en $C_1$ à $C_{10}$ et
$R_5$ et $R_6$, qui sont identiques ou différents, sont mis chacun pour des atomes d'hydrogène, des restes alkyle en $C_1$–$C_{10}$, phényle, naphtyle, hydroxyalkyle en $C_2$–$C_{10}$ ou des restes polybutène ou polyisobutène contenant dans chaque cas 20 à 400 atomes de carbone,
un reste polyaminoalkylène de formule générale III

$$[-R_4-NR_5]_m-R_6 \qquad (III)$$

dans laquelle
les restes $R_4$ sont chaque fois identiques ou différents,
les restes $R_5$ sont chaque fois identiques ou différents,
les restes $R_4$, $R_5$ et $R_6$ ont les significations données précédemment et
m est mis pour un nombre entier de 2 à 8, ou
un reste polyoxyalkylène de formule générale IV'

$$-[-R_4-O]_n-H \qquad (IV')$$

dans laquelle
les restes $R_4$ sont chaque fois identiques ou différents et ont les significations précédentes et
n est un nombre entier entre 1 et 30, ou dans laquelle $R_2$ et $R_3$ forment ensemble, avec l'atome d'azote auquel ils sont fixés, un reste morpholinyle.

4. Composition de combustible ou de lubrifiant de formules générales I à IV' selon la revendication 3, dans laquelle le reste $R_1$ représente un reste polybutène ou polyisobutène à 35–200 atomes de carbone, dérivé d'isobutène et, pour une proportion allant jusqu'à 20% en poids, de n-butène, et
$R_2$ et $R_3$ sont identiques ou différents et représentent chacun un atome d'hydrogène, un reste méthyle, éthyle, n-propyle, i-propyle, n-butyle, butyle secondaire, i-butyle, butyle tertiaire, pentyle, hexyle, phényle,

$$-CH_2-CH_2-NH_2, \quad -CH_2-CH_2-N\begin{matrix} CH_3 \\ CH_3 \end{matrix},$$

$-[-CH_2-CH_2-NH]_p-CH_2-CH_2-NH_2$ (p étant mis pour un nombre entier de 1 à 7, en particulier de 1 à 3), $CH_2-CH_2-OH$, $-[-CH_2-CH_2-O-]_q-CH_2-OH$ (q étant mis pour un nombre entier de 1 à 30), ou représentent ensemble, avec l'atome d'azote auquel ils sont fixés, un reste morpholinyle.

5. Composition de combustible selon l'une quelconque des revendications 1 à 4, caractérisée en ce qu'elle contient la polybutène- ou polyisobutèneamine dans une proportion de 10 à 2000 ppm, en particulier de 100 à 400 ppm, par rapport au poids total de la composition.

6. Composition de lubrifiant selon l'une quelconque des revendications 1 à 4, caractérisée en ce qu'elle contient la polybutène- ou polyisobutèneamine dans une proportion de 0,5 à 5% en poids, en particulier de 1 à 3% en poids, par rapport au poids total de la composition.

7. Polybutène- ou polyisobutène-amines de formule générale I

$$R_1-CH_2-N\begin{matrix} R_2 \\ R_3 \end{matrix} \qquad (I)$$

dans laquelle
$R_1$ représente un reste polybutène ou polyisobutène à 20–400 atomes de carbone, dérivé d'isobutène et, pour une proportion allant jusqu'à 20% en poids, de n-butène, et
$R_2$ et $R_3$, qui sont identiques ou différents, représentent chacun un atome d'hydrogène, un reste alkyle en $C_1$–$C_{10}$, phényle, naphtyle, hydroxyalkyle en $C_1$–$C_{10}$, un reste aminoalkylène de formule générale II

$$-R_4-N\begin{matrix} R_5 \\ R_6 \end{matrix} \qquad (II)$$

dans laquelle
$R_4$ est mis pour un reste alkylène en $C_1$–$C_{10}$ et
$R_5$ et $R_6$, qui sont identiques ou différents, sont mis chacun pour un atome d'hydrogène, un reste en $C_1$–$C_{10}$, phényle, naphtyle, hydroxyalkyle en $C_1$–$C_{10}$ ou polybutène ou polyisobutène contenant chaque fois de 20 à 400 atomes de carbone,
un reste polyaminoalkylène de formule générale III

$$-[-R_4-NR_5]_m-R_6 \qquad (III)$$

dans laquelle
les restes $R_4$ sont chaque fois identiques ou différents,
les restes $R_5$ sont chaque fois identiques ou différents,
les restes $R_4$, $R_5$ et $R_6$ ont les significations données précédemment et
m est mis pour un nombre entier de 1 à 7, ou
un reste polyoxyalkylène de formule générale IV'

$$-[-R_4-O]_n-H \qquad (IV')$$

dans laquelle
les restes $R_4$ sont chaque fois identiques ou différents et ont les significations précédentes et
n est un nombre entier entre 1 et 30,
ou dans laquelle $R_2$ et $R_3$ forment ensemble, avec l'atome d'azote auquel ils sont fixés, un reste morpholinyle, ces polybutène- ou polyisobutène-amines étant utilisées individuellement ou en mélanges entre elles.

8. Utilisation des polybutène- ou polyisobutène-amines de formule générale I selon la revendication 7 dans des compositions de carburant ou de lubrifiant pour des moteurs à combustion interne.

9. Procédé de préparation des polybutène- ou polyisobutène-amines de formule générale I selon la revendication 7, caractérisé en ce qu'on hydroformyle un polybutène ou un polyisobutène avec un catalyseur au rhodium ou au cobalt en présence de CO et de $H_2$ à des températures comprises entre 80 et 200°C et sous des pressions de $CO/H_2$ allant jusqu'à 600 bars, puis on soumet le produit oxo à une réaction de Mannich ou à une amination hydrogénante.

10. Polybutène- ou polyisobutène-alcools de formule générale V

$R_1-CH_2-OH$ (V)

dans laquelle $R_1$ représente un reste polybutène ou polyisobutène dérivé d'isobutène et, pour une proportion allant jusqu'à 20% en poids, de n-butène.

11. Polybutène- ou polyisobutène-alcools de formule générale V selon la revendication 10, dans lesquels le reste $R_1$ comporte de 20 à 400 atomes de carbone.

**Revendications pour l'Etat contractant: ES**

1. Procédé de préparation de polybutène- ou polyisobutène-amines, caractérisé en ce que, pour l'obtention de polybutène- ou polyisobutène-amines de formule générale I

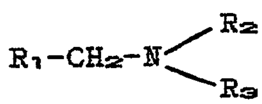 (I)

dans laquelle
$R_1$ représente un reste polybutène ou polyisobutène dérivé d'isobutène et, pour une proportion allant jusqu'à 20% en poids, de n-butène, et
$R_2$ et $R_3$, qui peuvent être identiques ou différents, peuvent être mis pour des atomes d'hydrogène, des restes hydrocarbonés aliphatiques ou aromatiques, des restes aminoalkylène ou des restes polyaminoalkylène primaires ou secondaires, aromatiques ou aliphatiques, des restes polyoxyalkylène, des restes hétéroaryle ou hétérocycliques, ou forment ensemble, avec l'atome d'azote auquel ils sont fixés, un noyau dans lequel d'autres hétéroatomes encore peuvent être présents,
on hydroformyle un polybutène ou un polyisobutène avec un catalyseur au rhodium ou au cobalt en présence de CO et de $H_2$ à des températures comprises entre 80 et 200°C et sous des pressions de $CO/H_2$ allant jusqu'à 600 bars, puis on soumet le produit oxo à une amination hydrogénante.

2. Procédé de préparation de polybutène- ou polyisobutène-amines de formule (I) selon la revendication 1, caractérisé en ce que dans la formule (1), $R_1$ a la signification donnée précédemment et $R_2$ et $R_3$ sont identiques ou différents et représentent chacun un atome d'hydrogène, un reste alkyle, aryle, hydroxyalkyle, un reste aminoalkylène de formule générale II

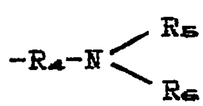 . (II)

dans laquelle
$R_4$ est mis pour un reste alkylène et
$R_5$ et $R_6$, qui sont identiques ou différents, sont mis chacun pour un atome d'hydrogène ou pour un reste alkyle, aryle, hydroxyalkyle, polybutyle ou polyisobutyle,
un reste polyaminoalkylène de formule générale III

$$-[-R_4-NR_5]_m-R_6 \qquad (III)$$

dans laquelle
les restes $R_4$ sont chaque fois identiques ou différents,
les restes $R_5$ sont chaque fois identiques ou différents,
les restes $R_4$, $R_5$ et $R_6$ ont les significations données précédemment et
m est mis pour un nombre entier de 2 à 8, ou
un reste polyoxyalkylène de formule générale IV

$$-[-R_4-O]_n-X \qquad (IV)$$

dans laquelle
les restes $R_4$ peuvent être chaque fois identiques ou différents et ont les significations précédentes,
X est mis pour un radical alkyle ou H et
n est un nombre entier entre 1 et 30,
ou dans laquelle $R_2$ et $R_3$ forment ensemble, avec l'atome d'azote auquel ils sont fixés, un reste morpholinyle, un reste pyridyle, un reste pipéridyle, un reste pyrrolyle, un reste pyrimidinyle, un reste pyrrolinyle, un reste pyrrolidinyle, un reste pyrazinyle ou un reste pyridazinyle.

3. Procédé de préparation de polybutène- ou polyisobutène-amines de formule (I) selon la revendication 1, caractérisé en ce que dans la formule (I),
$R_1$ représente un reste polybutyle ou polyisobutyle à 20–400 atomes de carbone, dérivé d'isobutène et, pour une proportion allant jusqu'à 20% en poids, de n-butène et
$R_2$ et $R_3$, qui sont identiques ou différents, représentent chacun un atome d'hydrogène, un reste alkyle en $C_1$ à $C_{10}$, phényle, naphtyle, hydroxyalkyle en $C_2$ à $C_{10}$, un reste aminoalkylène de formule générale II

$$-R_4-N\begin{matrix} R_5 \\ R_6 \end{matrix} \qquad (II)$$

dans laquelle
$R_4$ est mis pour un radical alkylène en $C_1$ à $C_{10}$ et
$R_5$ et $R_6$, qui sont identiques ou différents, sont mis pour des atomes d'hydrogène, des restes alkyle en $C_1$–$C_{10}$, phényle, naphtyle, hydroxyalkyle en $C_2$–$C_{10}$ ou des restes polybutyle ou polyisobutyle contenant dans chaque cas de 20 à 400 atomes de carbone,
un reste polyaminoalkyle de formule générale III

$$-[-R_4-NR_5]_m-R_6 \qquad (III)$$

dans laquelle
les restes $R_4$ sont chaque fois identiques ou différents,
les restes $R_5$ sont chaque fois identiques ou différents,
les restes $R_4$, $R_5$ et $R_6$ ont les significations donées précédemment et
m est mis pour un nombre entier de 2 à 8, ou
un reste polyoxyalkylène de formule générale IV'

$$-[-R_4-O]_n-H \qquad (IV')$$

dans laquelle
les restes $R_4$ sont chaque fois identiques ou différents et ont les significations précédentes et
n est un nombre entier entre 1 et 30,
ou dans laquelle $R_2$ et $R_3$ forment ensemble, avec l'atome d'azote auquel ils sont fixés, un reste morpholinyle.

4. Procédé de préparation de polybutène- ou polyisobutène-amines de formule (I) selon la revendication 1, caractérisé en ce que dans la formule (I), le reste $R_1$ représente un reste polybutène ou polyisobutène à 35–200 atomes de carbone, dérivé d'isobutène et, pour une proportion allant jusqu'à 20% en poids, de n-butène, et
$R_2$ et $R_3$ sont identiques ou différents et représentent chacun un atome d'hydrogène, un reste méthyle, éthyle, n-propyle, i-propyle, n-butyle, butyle secondaire, i-butyle, butyle tertiaire, pentyle, hexyle, phényle,

$$-CH_2-CH_2-NH_2, \quad -CH_2-CH_2-N\begin{matrix} CH_3 \\ CH_3 \end{matrix},$$
$$-[-CH_2-CH_2-NH]_p-CH_2-CH_2-NH_2$$

(p étant mis pour un nombre entier de 1 à 7, en particulier de 1 à 3), $CH_2$–$CH_2$–OH,

$$-[-CH_2-CH_2-O-]_q-CH_2-OH$$

(q étant mis pur un nombre entier de 1 à 30), ou représentent ensemble, avec l'atome d'azote auquel ils sont fixés, un reste morpholinyle.